# FASCICULE DE BREVET EUROPEEN

(11) **EP 3 454 643 B1**
(45) Date de publication et mention de la délivrance du brevet: **28.04.2021**
(21) Numéro de dépôt: 17725706.0
(22) Date de dépôt: 02.05.2017
(51) Int. Cl.: A01G 15/00

(54) **DISPOSITIF POUR L'ENSEMENCEMENT D'UNE CELLULE NUAGEUSE**
GERÄT FÜR DAS IMPFEN VON EINER WOLKENZELLE
DEVICE FOR THE SOWING OF A CLOUD CELL

(30) Priorité: 10.05.2016 FR 1654155
(43) Date de publication de la demande: 20.03.2019
(73) Titulaire: Selerys, 13790 Rousset (FR)
(72) Inventeur: CARDI, Philippe, 13850 Greasque (FR)
(74) Mandataire: Med'inVent Consulting
(86) Numéro de dépôt international: PCT/FR2017/051045
(87) Numéro de publication internationale: WO 2017/194856

(56) Documents cités:
- WO-A1-2014/082036
- WO-A1-2014/082036
- WO-A2-2015/191812
- WO-A2-2015/191812
- CN-A- 105 607 153
- CN-U- 201 467 770
- CN-U- 201 467 770
- GB-A- 2 476 518
- GB-B- 2 476 518
- JP-A- 2005 013 017
- JP-A- 2005 013 017
- US-A- 230 067
- US-A- 1 103 490
- US-A- 1 103 490
- EUNSIL JUNG ET AL: "Use of Radar Chaff for Studying Circulations in and around Shallow Cumulus Clouds", JOURNAL OF APPLIED METEOROLOGY AND CLIMATOLOGY, vol. 53, no. 8, 1 août 2014 (2014-08-01), pages 2058-2071, XP055331984, ISSN: 1558-8424, DOI: 10.1175/JAMC-D-13-0255.1
- Eunsil Jung ET AL: "Use of Radar Chaff for Studying Circulations in and around Shallow Cumulus Clouds", Journal of Applied Meteorology and Climatology, vol. 53, no. 8, 1 August 2014 (2014-08-01) , pages 2058-2071, XP055331984, ISSN: 1558-8424, DOI: 10.1175/JAMC-D-13-0255.1

## Description

L'invention concerne le domaine des dispositifs en application avec la prévention et/ou la perturbation des équilibres météorologiques et microphysiques. De tels dispositifs sont utilisés pour tous types d'usage et préférentiellement mais non limitativement, pour assurer des fonctions d'ensemencement d'une cellule nuageuse (également connu sous la dénomination anglo-saxonne « *cloud seeding* »).

Dans la suite du document, l'invention sera décrite préférentiellement mais non limitativement dans le cadre de la prévention contre la grêle.

A l'heure actuelle, le réchauffement climatique, ou plus généralement les changements climatiques sont au cœur de nombreuses discussions. De tels changements climatiques concernent notamment, mais non limitativement, le domaine agricole qui souffre particulièrement de changements météorologiques impromptus. Dans certains territoires, tels que l'Afrique ou l'Asie, les ressources en eaux ont considérablement diminué ces dernières années. En outre, les difficultés d'approvisionnement en eau ont aggravé la situation. Par ailleurs, sur d'autres territoires tels qu'en Europe par exemple, des exploitants, tels que certains agriculteurs, souffrent de chutes de grêles impromptues sur leurs exploitations, lesdites chutes pouvant entraîner des dégâts considérables sur de futures récoltes. Il en va de même pour la neige qui parfois refait surface au printemps de façon inattendue, détruisant tout ou partie des cultures en cours, alors que les températures semblaient plus clémentes pour l'agriculture.

La plupart des phénomènes météorologiques, tels qu'à titre d'exemples non limitatifs, la pluie, la grêle ou la neige, sont dues à des phénomènes de surfusion de l'eau au sein de cellules nuageuses ou plus généralement de l'atmosphère. Au départ, une cellule nuageuse est essentiellement constituée de gouttelettes d'eau liquide en suspension dans l'atmosphère. En effet, le soleil, de par son irradiation, vaporise les ressources en eau liquide. L'air chaud ainsi formé et présent dans l'atmosphère renferme par conséquent de la vapeur d'eau qui, de par sa faible densité, s'élève en altitude. Se faisant, la pression diminue et l'air chaud précédemment formé se refroidit, pour au fur et à mesure se condenser en fines gouttelettes autour de fines particules présentes dans l'atmosphère et s'agglomérer. Ainsi se forme une cellule nuageuse. Selon les régions dans lesquelles se déplace une cellule nuageuse, cette dernière peut par la suite être précurseur de la formation de pluie, de neige ou encore de grêle. Lorsqu'une cellule nuageuse atteint une zone ou région où la température est comprise entre 0 et - 35°C (températures négatives), zone où des cristaux de glace se forment à partir de noyaux glaçogènes (également connus sous le terme « noyaux de congélation »), les gouttelettes d'eau présentes au sein de la cellule nuageuse et surfondues avoisinent lesdits cristaux de glace. Les gouttelettes d'eau migrent alors vers les cristaux de glace et permettent auxdits cristaux d'accroître leurs tailles jusqu'à devenir des flocons de neige au sein de la cellule nuageuse. Selon la température extérieure au sol, de tels flocons de neige, lorsqu'ils sont précipités, se transformeront en pluie, en été par exemple, ou resteront à l'état de neige, en hiver par exemple. La formation de la grêle provient ensuite du processus de croissance des cristaux de glace en présence de courants ascendants ou courants d'air chaud suffisamment forts pour que ces derniers maintiennent les cristaux en suspension dans la cellule nuageuse. De telles cellules nuageuses sont qualifiées de « cumulonimbus ». Ainsi, en présence de courants ascendants, les gouttelettes d'eau surfondues sont poussées vers la région la plus haute, par conséquent la plus froide, de la cellule nuageuse où se trouvent les cristaux de glace pour se mêler auxdits cristaux et former des grêlons. Lesdits grêlons sont à leur tour emportés par les courants ascendants et d'autres cristaux de glace viennent alors s'agglomérer aux grêlons et permettent alors l'accroissement de la taille des grêlons jusqu'à une taille ne permettant plus aux grêlons d'être contenus au sein de la cellule nuageuse. Les grêlons sont alors précipités vers le sol.

Au vu des dégâts importants que pouvaient amener la pluie, la neige ou encore la grêle, différents chercheurs ont tenté de trouver des méthodes ou procédés destinés à perturber les équilibres microphysiques afin de changer les processus de formation des précipitations et ainsi de modifier le climat : il s'agit de méthodes d'ensemencement. A titre d'exemples non limitatifs, de telles méthodes permettent d'accroître la condensation de la vapeur d'eau en eau liquide disponible dans une cellule nuageuse et ainsi d'augmenter ou diminuer la taille et le nombre de gouttelettes présentes au sein de ladite cellule nuageuse. In fine, de telles méthodes peuvent provoquer des précipitations ou en variante des chutes de grêle. Pour ce faire, des particules, éventuellement artificielles, ou substances actives, également connues sous la dénomination de « noyaux de congélation artificiels », sont introduites au sein d'une cellule nuageuse afin d'altérer, perturber, voire même modifier les échanges entre les différents états de l'eau, par exemple, en accélérant la croissance de certaines gouttelettes ou la solidification desdites gouttelettes en cristaux de glace. Dans tout le document, on utilisera indistinctement les expressions « agent », « particules » ou « substance active » pour définir les éléments responsables de l'ensemencement. Lesdites particules ou substances actives ont préférentiellement une forte affinité avec l'eau. En outre, selon le type d'action ou l'altitude souhaitée, éventuellement en fonction des conditions locales, différentes natures de substance(s) active(s) peuvent être employées. Généralement, pour les zones froides, telles que par exemple les zones situées à plus de trois mille mètres, de telles particules peuvent être avantageusement mais non limitativement constituées de noyaux glaçogènes, tels que l'iodure d'argent ou encore l'iodure de cuivre. L'emploi d'iodure d'argent est particulièrement intéressant et par conséquent préféré, puisqu'il s'agit de la particule la plus efficace à -5°C en faibles quantités. En variante ou en complément, d'autres chercheurs préconisent, selon les applications, pour des zones dites chaudes par exemple, des sels hygroscopiques, sous la forme par exemple de sels de sodium, calcium ou de magnésium, des alginates. En variante, de telles particules peuvent encore consister en des matériaux réfrigérants, tels que la neige carbonique qui agit aux alentours de -35°C, permettant ainsi la cristallisation de l'eau en surfusion et procurant ainsi un effet similaire ou identique au iodure d'argent. Par ailleurs, de tels matériaux réfrigérants peuvent être, en variante ou en complément, du propane ou de l'azote liquide. Préférentiellement mais non limitativement, de telles particules sont généralement diffusées au moyen d'aérosols. La présence de courants ascendants au sein de la cellule nuageuse peut grandement augmenter l'efficacité des particules ou agents pour l'ensemencement. En effet, les courants ascendants entraînent et aspirent les particules afin que ces dernières se dispersent au sein de la cellule nuageuse, atteignent l'eau en surfusion et rencontrent les cristaux de glace ou grêlons.

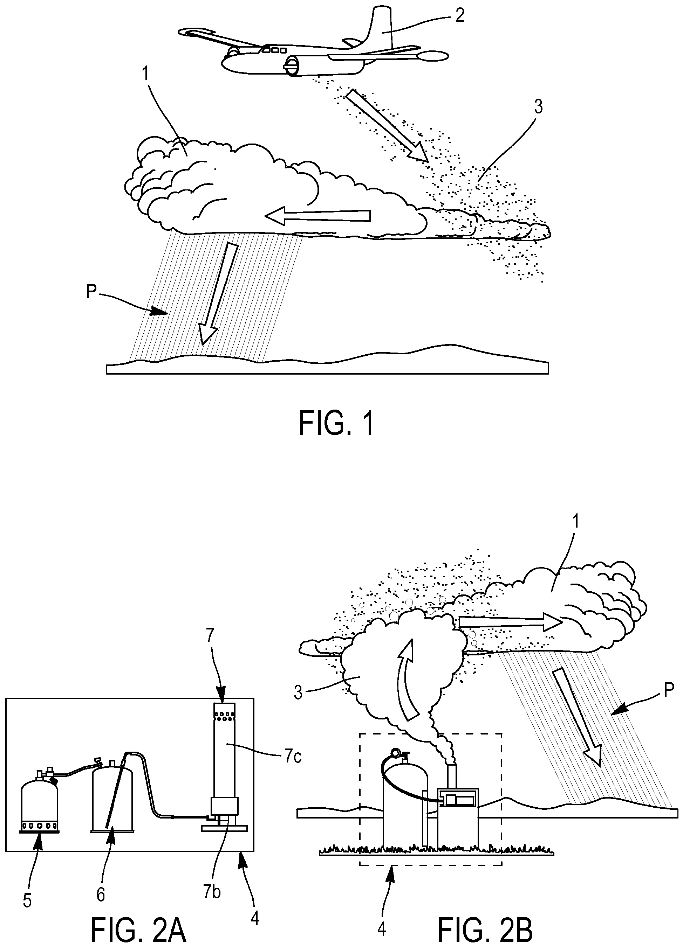

Afin d'assurer la diffusion de telles particules, quelle que soit leur composition, différentes techniques et systèmes peuvent être utilisés. Les figures 1, 2A et 2B présentent respectivement des premiers et deuxièmes modes de réalisation de dispositifs connus pour l'ensemencement d'une cellule nuageuse.

Tout d'abord, l'ensemencement d'une cellule nuageuse peut être effectué par voie aérienne, au moyen par exemple d'appareils aériens. Ce premier mode de réalisation est décrit en lien avec la figure 1. Un appareil aérien consiste avantageusement en un avion 2 adapté pour l'ensemencement d'une cellule nuageuse 1. Des dispositifs pour l'ensemencement d'une cellule nuageuse 1 sous la forme de diffuseurs (non représentés sur la figure 1) de particules 3 peuvent avantageusement équiper un tel appareil aérien et, par exemple, être positionnés au niveau des ailes lorsque l'appareil aérien est l'avion 2. Le pilote (non représenté sur la figure 1) d'un tel appareil aérien délivre alors des particules à la base d'une cellule nuageuse 1 ou sur le flanc de ladite cellule nuageuse 1. Pour ce faire, de tels ensemencements requièrent une mise en œuvre par des pilotes expérimentés et chevronnés, compte tenu des importantes turbulences auxquelles doivent faire face lesdits pilotes. En outre, afin de traiter simultanément plusieurs cellules nuageuses, il faut disposer de plusieurs appareils aériens et par conséquent de plusieurs pilotes. Par ailleurs, de tels appareils aériens ne peuvent circuler librement : ils doivent se conformer et respecter des règles de circulation aérienne en vigueur selon les territoires survolés par lesdits appareils aériens. Aussi, de telles opérations engendrent des contraintes techniques, et par voie de conséquence la nécessité d'une expertise particulière, et des coûts financiers importants, pouvant dans certaines situations mettre à mal le bon déroulement des opérations. Enfin, la maîtrise de la diffusion des particules n'est pas toujours adéquate, lorsque l'appareil aérien est en vol, puisque les conditions météorologiques peuvent être facteurs de difficultés supplémentaires lors de la délivrance des particules.

Pour tenter de réduire les coûts d'un tel ensemencement, il a été également mis au point des dispositifs conçus pour l'ensemencement d'une cellule nuageuse sous la forme de fusées, de type « paragrêle » dans le cadre de la prévention contre la grêle. De telles fusées peuvent éventuellement être lancées depuis le sol terrestre. En variante, de telles fusées peuvent être avantageusement installées sur des appareils aériens, tels que celui décrit en lien avec la figure 1, avantageusement en dessus ou au dessous des ailes de l'avion 2 par exemple. Durant l'envol des appareils aériens, lesdites fusées sont par la suite tirées dans une ou plusieurs cellules nuageuses. L'efficacité desdites fusées peut également dépendre de la présence de courants ascendants, qui peuvent impacter cette fois-ci négativement sur la propagation des particules au sein de la cellule nuageuse. Toutefois, l'emploi, pour l'ensemencement d'une cellule nuageuse d'une ou plusieurs fusées pyrotechniques, présente de nombreux inconvénients. D'une part, il existe plusieurs dangers liés à l'emploi d'engins explosifs, requérant dans de nombreuses situations l'application de normes pyrotechniques. Par ailleurs, lorsque les utilisations sont liées à l'emploi d'appareils aériens ou éventuellement lorsque les fusées sont lancées dans des territoires impliquant un trafic aérien, il est nécessaire également de veiller au respect de règles de circulation aérienne en vigueur. Outre les problématiques normatives et sécuritaires, les tirs de fusées n'assurent pas toujours une propagation adéquate des particules et in fine l'efficacité desdites fusées s'en trouve réduite. En effet, il est très souvent difficile de maîtriser la trajectoire d'une fusée, une fois que celle-ci a été lancée.

Eventuellement, en variante, des appareils aériens peuvent être équipés de perches et torches à sels hygroscopiques (non représentées sur la figure 1). A l'instar des fusées, de telles torches présentent les mêmes classes d'inconvénients, notamment en matière de normes sécuritaires.

Face aux inconvénients que présentent les dispositifs pour l'ensemencement d'une cellule nuageuse en lien avec des appareils aériens, tels que celui décrit en lien avec la figure 1, d'autres chercheurs préconisent l'emploi de dispositifs terrestres. De tels dispositifs terrestres pour l'ensemencement d'une cellule nuageuse sont qualifiés de brûleurs au sol ou encore connus sous les termes de « générateurs à vortex » ou « générateurs de particules glaçogènes ». De tels dispositifs terrestres consistent en un deuxième mode de réalisation d'un dispositif connu pour l'ensemencement d'une cellule nuageuse et sont décrits en lien avec les figures 2A et 2B. Selon les figures 2A et 2B, un tel dispositif terrestre ou générateur à vortex 4, spécialement adapté pour l'ensemencement d'une cellule nuageuse 1, comprend une bouteille 5 d'air comprimé, un réservoir 6 comportant une solution contenant de l'acétone et de l'iodure d'argent, ledit réservoir 6 étant en communication fluidique avec la bouteille 5 d'air comprimé au moyen d'un ou plusieurs conduits et de vannes adaptées pour régler la pression de l'air comprimé régnant dans lesdits conduits. Le dispositif terrestre 4 comporte en outre une chambre de combustion 7 comprenant une cheminée cylindrique 7c à la base de laquelle est positionné un brûleur 7b. La chambre de combustion 7 coopère par ailleurs avec le réservoir 6 de solution d'acétone et d'iodure d'argent. Le principe de fonctionnement d'un tel dispositif terrestre 4 est le suivant : la solution d'acétone et d'iodure d'argent est mise sous pression au moyen de l'air comprimé contenu dans la bouteille 5 et d'un détendeur au sein du réservoir 6. Par la suite, ladite solution d'acétone et d'iodure d'argent est vaporisée, puis pulvérisée au sein de la chambre de combustion 7, grâce à un gicleur (non représenté sur les figures 2A et 2B), puis enflammée par le brûleur 7b pour s'élever dans l'atmosphère et permettre ensuite l'ensemencement de la cellule nuageuse 1.

Toutefois, ces dispositifs terrestres, tels que celui décrit en lien avec les figures 2A et 2B, présentent également un certain nombre d'inconvénients. Tout d'abord, un tel dispositif étant positionné au sol, la diffusion des particules, telles que l'iodure d'argent, pour l'ensemencement d'une cellule nuageuse, peut être soumise à certaines contraintes, du fait de la présence notamment de nombreux obstacles présents à la surface de la terre, comme par exemple, des arbres ou encore des bâtiments, altérant ou empêchant ainsi la diffusion des particules au sein des cellules nuageuses. En outre, une telle diffusion de particules est bien souvent imprécise, puisque les dispositifs terrestres se trouvent généralement être positionnés de manière statique, à une distance relativement élevée des cellules nuageuses à ensemencer, de l'ordre de plusieurs centaines à plusieurs milliers de mètres. La présence de courants d'air ou de vents peut alors dévier la trajectoire des particules, obérer le bon fonctionnement de l'ensemencement et par ailleurs entraîner la contamination des environnements situés à proximité desdits dispositifs terrestres. En outre, du fait de sa présence au sol et de son encombrement, il est bien souvent impossible de déplacer rapidement un dispositif terrestre, alors que les cellules nuageuses peuvent éventuellement se mouvoir. Enfin, le processus opératoire imposé par l'emploi d'un dispositif terrestre contient également un certain nombre d'inconvénients. Actuellement, au sein des dispositifs terrestres, il n'existe aucun moyen de suivi de trajectoire et/ou de diffusion des particules, afin de vérifier si, de manière non limitative, lesdites particules se sont élevées dans l'atmosphère et si elles se sont dispersées correctement au sein des cellules nuageuses à ensemencer.

Alternativement, pour permettre la prévention de la grêle, d'autres dispositifs terrestres connus peuvent consister en des canons à ondes de choc (non représentés sur les figures), également connus sous le terme de « canons anti-grêle ». Une ou plusieurs ondes sonores sont émises par le canon et dirigées vers la ou les cellules nuageuses à traiter. L'onde de choc cristallise alors l'eau en surfusion et génère un vortex à la sortie du canon, permettant ainsi l'ionisation de l'air à une centaine de mètres d'altitude. A l'instar des dispositifs terrestres précédemment décrits, de tels canons anti-grêle n'apportent pas de solutions pertinentes pour remédier aux inconvénients proposés par les autres dispositifs pour ensemencer une cellule nuageuse, tels que ceux précédemment décrits en lien avec les figures 1, 2A et 2B. Par ailleurs, peu d'études techniques et scientifiques ont été menées pour déterminer la pertinence, voire même l'efficacité de telles méthodes d'ensemencement.

Des dispositifs aérostatiques ont également été utilisés. Par exemple, le brevet US1,103,490 divulgue l'emploi d'un ballon pour de l'ensemencement de cellule nuageuse. Cependant, un tel ballon comporte une mèche à poudre pour déclencher l'ensemencement, dont l'emploi assure un déclenchement relativement peu précis

Les documents WO 2015/191812 et CN 201 467 770 U illustrent d'autres exemples de dispositifs d'ensemencement de cellule nuageuse.

L'invention permet de répondre à tout ou partie des inconvénients soulevés par les solutions connues.

Parmi les nombreux avantages apportés par un dispositif pour l'ensemencement d'une cellule nuageuse selon l'invention, nous pouvons mentionner que celui-ci permet :
- d'offrir un processus d'ensemencement plus précis par l'emploi d'un dispositif véhiculant une substance active dont la trajectoire et/ou la dispersion peuvent être maîtrisées ;
- de proposer un dispositif simple, modulaire et rapide, adaptable à une multitude d'applications ;
- de garantir une action ciblée et d'éviter toute contamination de l'environnement proche ;
- de s'affranchir des problématiques normatives et des contraintes sécuritaires d'ores et déjà imposées par les solutions actuellement employées.

A cette fin, il est notamment prévu un dispositif pour l'ensemencement d'une cellule nuageuse, comportant des moyens pour véhiculer une substance active et des moyens pour délivrer ladite substance active, ledit dispositif comportant en outre des moyens aérostatiques comprenant un ballon et coopérant avec les moyens pour véhiculer ladite substance active. Pour réduire, voire même écarter toute problématique normative et/ou sécuritaire et pour assurer un ensemencement maîtrisé, ledit dispositif pour l'ensemencement d'une cellule nuageuse est agencé de sorte que la rupture dudit ballon est provoquée lorsque ledit ballon atteint sensiblement une altitude déterminée.

En variante, afin de faciliter la fabrication d'un dispositif conforme à l'invention, les moyens pour véhiculer et les moyens pour délivrer de celui-ci peuvent consister en une seule et même entité physique.

En variante, à des fins de simplification, les moyens pour véhiculer et/ou les moyens pour délivrer d'un dispositif selon l'invention peuvent être compris au sein des moyens aérostatiques.

De manière avantageuse, les moyens pour délivrer et les moyens aérostatiques d'un dispositif conforme à l'invention peuvent consister en une seule et même entité physique.

Afin de proposer un dispositif tout-en-un, les moyens pour véhiculer d'un dispositif conforme à l'invention peuvent comporter une substance active.

Préférentiellement mais non limitativement, la substance active peut être principalement constituée d'iodure d'argent ou de sel hygroscopique.

En variante ou en complément, pour permettre la traçabilité d'un dispositif conforme à l'invention, les moyens pour véhiculer de celui-ci peuvent également comporter des particules marqueurs de propagation détectables par tout moyen d'analyse adapté.

Pour assurer une maîtrise de l'ensemencement d'une cellule nuageuse, les moyens pour délivrer d'un dispositif selon l'invention peuvent comporter ou coopérer avec des moyens déclencheurs agencés pour provoquer la délivrance de la substance active à une position donnée.

De manière avantageuse, afin d'accélérer la délivrance de la substance active, les moyens déclencheurs d'un dispositif conforme à l'invention peuvent comporter un ou plusieurs éléments saillants dont la partie distale est en contact avec les moyens aérostatiques.

En variante ou en complément, pour actionner de manière automatique et précise la délivrance d'une substance active, les moyens déclencheurs d'un dispositif conforme à l'invention peuvent comporter :
- une première unité de traitement ;
- un premier capteur coopérant avec ladite première unité de traitement et délivrant à ladite première unité de traitement une mesure d'une première grandeur physique représentative de la pression au sein des moyens aérostatiques ;
- ladite première unité de traitement étant agencée pour comparer la mesure de la première grandeur physique à un seuil prédéterminé et, lorsque ladite mesure atteint ledit seuil, pour générer une commande d'actionnement à destination des moyens pour délivrer la substance active ;
et les moyens pour délivrer peuvent être à commandes électriques et aptes à interpréter les commandes générées par les moyens déclencheurs.

En variante ou en complément, pour assurer une meilleure traçabilité d'un dispositif conforme à l'invention, ce dernier peut comporter en outre des moyens de suivi de trajectoire et/ou de position dudit dispositif, lesdits moyens de suivi coopérant avec les moyens aérostatiques et comportant :
- une deuxième unité de traitement ;
- un deuxième capteur pour mesurer et collecter une deuxième grandeur physique relative à la trajectoire et/ou la position du dispositif coopérant avec ladite deuxième unité de traitement;
- une mémoire de données coopérant avec ladite deuxième unité de traitement dans laquelle ladite deuxième unité de traitement inscrit la deuxième grandeur mesurée et collectée selon une périodicité donnée.

De manière avantageuse, à des fins de simplification, les première et deuxième unités de traitement peuvent consister en une seule et même entité physique.

Lorsque des particules marqueurs sont présentes au sein d'un dispositif conforme à l'invention, le deuxième capteur peut être apte à détecter les particules marqueurs de propagation selon un moyen d'analyse adapté.

Préférentiellement mais non limitativement, pour suivre la trajectoire et/ou la position d'un dispositif conforme à l'invention, le deuxième capteur peut comporter un accéléromètre et/ou un gyroscope.

Afin de permettre une traçabilité en temps réel de la trajectoire d'un dispositif conforme à l'invention, les moyens de suivi de ce dernier peuvent comporter en outre des moyens de communication coopérant avec la deuxième unité de traitement, lesdits moyens de communication étant agencés pour transmettre à destination d'une entité électronique distante tout ou partie du contenu de la mémoire de données.

Pour asservir et/ou corriger la trajectoire d'un dispositif conforme à l'invention, celui-ci peut comporter des moyens correcteurs de trajectoire coopérant avec les moyens aérostatiques.

Selon un deuxième objet, l'invention concerne également un système pour l'ensemencement d'une cellule nuageuse. Afin d'offrir un processus d'ensemencement plus précis par l'emploi d'un dispositif véhiculant une substance active dont la trajectoire et/ou la dispersion peuvent être maîtrisées, un système conforme à l'invention comporte un dispositif pour l'ensemencement selon le premier objet de l'invention et une entité électronique distante apte à communiquer avec ledit dispositif via les moyens de communication au travers d'une liaison filaire ou sans fil.

En variante ou en complément, lorsque l'entité électronique d'un système conforme à l'invention n'est pas apte à communiquer avec un dispositif conforme au premier objet de l'invention de manière provisoire ou permanente, ladite entité électronique peut être agencée pour lire le contenu de la mémoire des moyens de suivi dudit dispositif.

En complément, pour faciliter la mise en œuvre d'un dispositif pour l'ensemencement d'une cellule nuageuse conforme à l'invention, un système conforme à l'invention peut en outre comprendre une station de préparation et/ou de lancement dudit dispositif.

D'autres caractéristiques et avantages apparaîtront plus clairement à la lecture de la description qui suit et à l'examen des figures qui l'accompagnent parmi lesquelles :
- les figures 1, 2A et 2B, précédemment décrites, illustrent des vues détaillées de dispositifs pour l'ensemencement d'une cellule nuageuse connus ;
- les figures 3A et 3B présentent respectivement des premier et deuxième modes de réalisation d'un dispositif pour l'ensemencement d'une cellule nuageuse conforme à l'invention ;
- la figure 3C présente un mode de réalisation d'un dispositif pour l'ensemencement dans son contexte applicatif de lutte contre la grêle ;
- les figures 4A et 4B illustrent respectivement des troisième et quatrième modes de réalisation d'un dispositif pour l'ensemencement d'une cellule nuageuse conforme à l'invention.

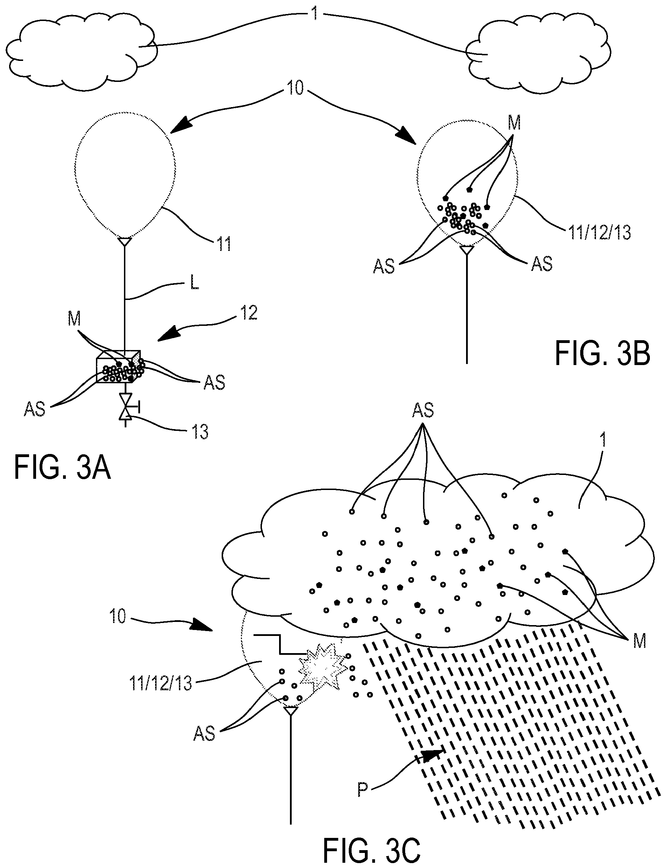

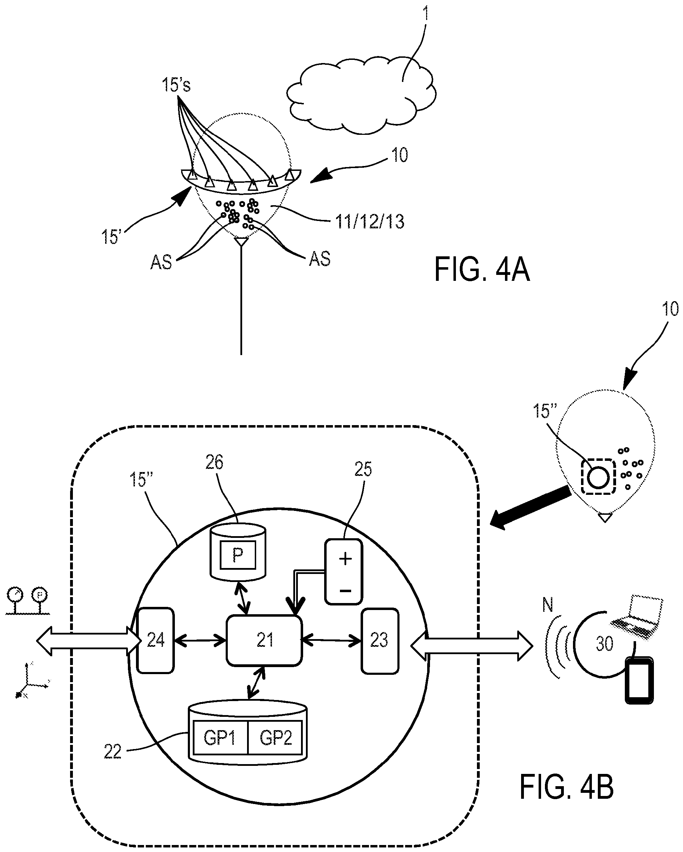

Les figures 3A et 3B, 4A et 4B schématisent différents modes de réalisation d'un dispositif pour l'ensemencement d'une cellule nuageuse conforme à l'invention.

Au sens de l'invention et dans tout le document, on entend par « cellule nuageuse » tout amas ou masse de fines gouttelettes d'eau liquide ou vaporisée en suspension dans l'atmosphère, lesdites gouttelettes étant éventuellement maintenues en suspension du fait de la présence de courants ascendants. En effet, lorsque la taille desdites gouttelettes n'excède pas quelques microns, lesdites gouttelettes peuvent être maintenues en suspension naturellement.

Afin de réaliser l'ensemencement d'une telle cellule nuageuse, c'est-à-dire de perturber les équilibres microphysiques au sein de la cellule, des particules ou substance active, également connues sous la dénomination de « noyaux de congélation artificiels » lorsque la substance active agit en zone froide, sont introduites au sein de ladite cellule nuageuse afin d'altérer, de perturber, voire même de modifier les échanges entre les différents états de l'eau, par exemple, en accélérant la croissance de certaines gouttelettes ou la solidification desdites gouttelettes en cristaux de glace. Comme précisé précédemment, dans tout le document, on utilisera indistinctement les expressions « charge active », « particules artificielles » ou « substance active » pour définir un agent responsable de l'ensemencement d'une cellule nuageuse.

Un tel dispositif 10 pour l'ensemencement d'une cellule nuageuse comporte ainsi des moyens pour véhiculer 12 une substance active et des moyens pour délivrer 13 ladite substance active. Les moyens pour véhiculer 12 une substance active consistent principalement en un contenant, c'est-à-dire tout élément, objet ou entité physique permettant d'accueillir ou recevoir ladite substance active, garantissant in fine le transport et/ou l'acheminement de la substance active jusqu'à une destination idéale prédéterminée pour assurer la fonction d'ensemencement. De tels moyens pour véhiculer 12 sont avantageusement étanches, voire même hermétiques, afin de préserver l'intégrité de la substance active, en prévenant notamment toute réaction chimique inopinée entre la substance active et l'environnement ambiant autour dudit dispositif et de permettre une application optimale des méthodes d'ensemencement. La délivrance d'une substance active intègre peut ainsi être efficacement acheminée à une position prédéterminée. Nous verrons dans la suite du document, que différents éléments d'un dispositif pour l'ensemencement conforme à l'invention contribuent à l'acheminement efficace à une position prédéterminée d'une telle substance active. De tels éléments peuvent consister plus particulièrement en les moyens aérostatiques, éventuellement sous la forme d'un ballon, l'acheminement à une position prédéterminée étant conséquence de la rupture dudit ballon. Pour ce faire, le matériau constituant principalement les moyens pour véhiculer 12, de par sa composition et/ou ses propriétés physico-chimiques, peut avantageusement assurer l'étanchéité, voire même l'hermétisme desdits moyens pour véhiculer 12. A titre d'exemple non limitatif, selon un premier mode de réalisation conforme à la figure 3A, de tels moyens pour véhiculer 12 peuvent comporter une nacelle, c'est-à-dire, au sens de l'invention, un panier ou une coque carénée, éventuellement clos, voire même scellée.

Pour assurer le déchargement de la substance active au sein de la cellule nuageuse, outre les moyens pour véhiculer 12, un dispositif 10 pour l'ensemencement d'une cellule nuageuse conforme à l'invention comprend des moyens pour délivrer 13 la substance active coopérant avec lesdits moyens pour véhiculer 12 ladite substance. De tels moyens pour délivrer 13 garantissent la propagation de la substance active à une position et/ou altitude prédéterminées considérées comme optimales. Aussi, lesdits moyens pour délivrer 13 comportent un ou plusieurs éléments, objets ou entités physiques permettant la diffusion de la substance active. Par ailleurs, la délivrance de la substance active peut être effectuée selon différentes techniques. Parmi ces différentes techniques, on distingue notamment et principalement deux méthodes : les moyens pour délivrer 13 peuvent assurer une diffusion progressive et éventuellement contrôlée, ou soudaine et instantanée. A titre d'exemple non limitatif, conformément à un premier mode de réalisation, selon la figure 3A, de tels moyens pour délivrer 13 la substance active peuvent comporter un dispositif de régulation, telle qu'une valve, une soupape, ou plus généralement tout équipement permettant de arrêter ou modifier le débit de la substance active dans l'atmosphère, notamment au sein de la cellule nuageuse. Lesdits moyens pour délivrer 13 peuvent alors agir tel un spray ou aérosol. Par ailleurs, de tels moyens pour délivrer 13 peuvent également comporter un vérin. En variante, de tels moyens pour délivrer peuvent comporter une ou plusieurs torches pyrotechniques, assurant la diffusion de la substance, que celle-ci consiste, à titre d'exemples non limitatifs en du sel hygroscopique ou de l'iodure d'argent, en chauffant cette dernière. Selon ce dernier mode de réalisation, la ou les torches pyrotechniques peuvent avantageusement consister en une ou plusieurs torches à double foyer. L'emploi de telles torches à double foyer s'avère particulièrement avantageux, puisque le foyer orienté vers les moyens aérostatiques d'un dispositif conforme à l'invention, qualifié de foyer supérieur, devient incandescent et se déclenche alors en fin de combustion, provoquant alors la rupture des moyens aérostatiques, éventuellement sous la forme d'un ballon.

La coopération entre les moyens pour véhiculer 12 et pour délivrer 13 peut être assurée par tout élément capable d'assurer l'association et/ou la communication entre lesdits moyens. Selon le premier mode de réalisation, conformément à la figure 3A, la coopération entre les moyens pour véhiculer 12 et pour délivrer 13 peut être assurée par un conduit avantageusement dimensionné pour cette fonction. L'invention ne saurait être limitée à la nature de l'élément qui garantit la coopération ou même les natures physiques des moyens pour véhiculer 12 et/ou pour délivrer 13 la substance active.

En variante, les moyens pour véhiculer 12 et les moyens pour délivrer 13 peuvent avantageusement consister en une seule et même entité physique. Un tel agencement permet notamment de diminuer le nombre d'éléments composant le dispositif 10 pour l'ensemencement, les moyens pour délivrer 12 et pour véhiculer 13 étant confondus, mais également de simplifier la fabrication et/ou l'installation dudit dispositif 10 et in fine de diminuer les coûts de fabrication et/ou d'installation.

Pour s'affranchir des problématiques normatives et des contraintes sécuritaires d'ores et déjà imposées par les solutions actuellement employées, telles que, comme précisé précédemment, les fusées ou les appareils aériens, un dispositif 10 pour l'ensemencement d'une cellule nuageuse conforme à l'invention comporte par ailleurs des moyens aérostatiques. On entend par « moyens aérostatiques », tout moyen, élément, objet ou entité physique dont la sustentation dans l'atmosphère, plus précisément l'air, est due à l'emploi d'un gaz plus léger que l'air. Par exemple, un tel gaz peut avantageusement mais non limitativement être de l'hélium. En variante, de l'hydrogène ou de l'air chaud peut éventuellement être employé. L'invention ne saurait être limitée au gaz employé au sein des moyens aérostatiques. A titre d'exemple préféré mais non limitatif, conformément aux différents modes de réalisation d'un dispositif conforme à l'invention, présentés en lien avec les figures 3A à 3C et 4A à 4B, les moyens aérostatiques peuvent comporter un ou plusieurs ballons 11. L'enveloppe de tels ballons peut en outre être principalement constituée de composés élastiques, préférentiellement mais non limitativement polymères, tels que par exemple le caoutchouc, le latex, le néoprène, le chloroprène ou le polyéthylène. Les moyens aérostatiques 11 peuvent être, par ailleurs, avantageusement scellés après introduction du gaz au sein desdits moyens aérostatiques par tout moyen de fermeture adapté.

Par ailleurs, de tels moyens aérostatiques, notamment de par leurs dimensions, nature et propriétés physico-chimiques, doivent être agencés pour permettre l'acheminement de la substance active aux environs de la cellule nuageuse et pour garantir par la suite l'ensemencement de cette dernière. Plus particulièrement, de tels moyens aérostatiques, éventuellement sous la forme d'un ou plusieurs ballons, sont avantageusement agencés de sorte que la rupture du ou desdits ballons, en combinaison avec d'éventuels moyens déclencheurs, est provoquée lorsque le ou les ballons atteignent l'altitude de ladite cellule nuageuse. Pour ce faire, lesdits moyens aérostatiques 11 coopèrent avantageusement avec les moyens pour véhiculer 12 ladite substance active. Une telle coopération consiste principalement en la solidarisation ou l'assemblage des moyens aérostatiques 11 avec les moyens pour véhiculer 12. Selon un premier mode de réalisation d'un dispositif conforme à l'invention, comme décrit en lien avec la figure 3A, une telle coopération entre les moyens aérostatiques et les moyens pour véhiculer peut être assurée au moyen d'une liaison L, avantageusement amovible ou permanente, par exemple via un ou plusieurs câbles.

En variante, les moyens pour véhiculer et/ou les moyens pour délivrer d'un dispositif conforme à l'invention peuvent être compris au sein des moyens aérostatiques. Un tel agencement permet notamment de diminuer le nombre d'éléments composant le dispositif 10 pour l'ensemencement, de simplifier la fabrication et/ou l'installation dudit dispositif 10 et in fine de diminuer les coûts de fabrication et/ou d'installation. Par ailleurs, selon une autre variante, conformément à un deuxième mode de réalisation d'un dispositif conforme à l'invention décrit en lien avec les figures 3B et 3C, les moyens pour délivrer et les moyens aérostatiques peuvent consister en une seule et même entité physique. A l'instar de la précédente variante, une telle configuration, du fait que les moyens aérostatiques 11 et les moyens pour délivrer 13 soient confondus, permet notamment de diminuer davantage le nombre d'éléments composant le dispositif 10 pour l'ensemencement, de simplifier la fabrication et/ou l'installation dudit dispositif 10 et in fine de diminuer les coûts de fabrication et/ou d'installation. Conformément au deuxième mode de réalisation décrit en lien avec la figure 3B, préférentiellement mais non limitativement, les moyens aérostatiques 11 et les moyens pour délivrer 13 d'un dispositif 10 conforme à l'invention peuvent consister en un ballon. Selon cet agencement particulièrement astucieux, les moyens pour véhiculer 12 sont également confondus avec les moyens aérostatiques 11 et comportés par le ballon. En effet, le ballon peut comporter en son sein la substance active AS, telle que représentée en figures 3B, 4A et 4C. La délivrance de la substance active AS est alors effectuée ou déclenché par la rupture dudit ballon, ladite rupture étant provoquée lorsque ledit ballon atteint sensiblement une altitude déterminée.

La figure 3C présente notamment un mode de fonctionnement du deuxième mode de réalisation d'un dispositif pour l'ensemencement d'une cellule nuageuse. D'après ce cas de figure, les moyens aérostatiques, les moyens pour véhiculer 12 et les moyens pour délivrer 13 consistent en une seule et même entité, sous la forme avantageuse mais non limitative d'un ballon 11. Comme précisé précédemment, un tel ballon peut être avantageusement empli d'un gaz plus léger que l'air, tel qu'à titre d'exemple non limitatif, de l'hélium. En outre, ledit ballon peut être principalement constitué d'un composé élastique, éventuellement polymère, tel qu'à titre d'exemple non limitatif du latex ou du chloroprène. En variante ou en complément, un tel ballon peut être composé d'un matériau biodégradable, tel que par exemple du papier. Par ailleurs, le ballon peut avantageusement être chargé en substance active AS (chargement non représenté sur les figures) puis scellé par tout moyen de fermeture adapté. Une fois le ballon chargé en air et en substance active puis scellé, ce dernier est lâché dans l'atmosphère pour atteindre sa cible, en l'espèce une cellule nuageuse. Du fait de la présence du gaz plus léger que l'air, le ballon peut avantageusement s'élever dans l'atmosphère grâce à la poussée d'Archimède, selon une direction sensiblement verticale (sensiblement normale par rapport à un référentiel, tel que le sol terrestre ou la ligne d'horizon). A proximité du sol atmosphérique, la pression de l'air à l'extérieur du ballon est sensiblement égale à la pression du gaz à l'intérieur du ballon. Aussi, les collisions des molécules composant l'air et le gaz respectivement à l'extérieur et au sein du ballon sont sensiblement égales, permettant au ballon de demeurer dans une configuration stable. Lorsque le ballon s'élève dans l'atmosphère et augmente en altitude, la présence de molécules d'air décroit du fait d'une diminution de la pression. Or, le ballon étant scellé, la quantité de molécules de gaz reste invariante au sein du ballon. Les collisions des molécules de gaz au sein du ballon étant plus importante, ce dernier continue de gonfler. Or, le matériau constituant le ballon, bien qu'avantageusement élastique, c'est-à-dire apte à retrouver sa forme d'origine après avoir été déformé, présente une limite d'élasticité. On définit la « limite d'élasticité » comme la contrainte, c'est-à-dire l'ensemble des forces appliquées au matériau constituant le ballon qui tendent à le déformer, à partir de laquelle le matériau constituant le ballon se déforme de façon irréversible jusqu'à une rupture éventuelle dudit matériau. Le ballon subit alors une déformation plastique jusqu'à obtenir une fissure sur la surface d'un ballon, telle que représentée sur la figure 3C. Du fait d'une forte tension présente à la surface du matériau, ladite fissure, par la suite lorsqu'elle a atteint sa vitesse limite, se multiplie en plusieurs fractures et se propage sur l'ensemble de la surface du ballon. Finalement, le ballon 11, plus particulièrement le matériau le composant, va se rompre en une pluralité de morceaux et permettre in fine la délivrance de la substance active AS, avantageusement au sein de la cellule nuageuse. Un fois la substance active AS diffusée au sein de la cellule nuageuse, à l'instar des méthodes d'ensemencement connues, les gouttelettes d'eau (non représentées en figure 3C) s'agglomèrent autour de la substance active, entraînant l'accroissement de la condensation de la vapeur d'eau en eau liquide disponible dans une cellule nuageuse et ainsi augmentant ou diminuant la taille et le nombre de gouttelettes présentes au sein de ladite cellule nuageuse pour in fine provoquer des précipitations de pluie P.

En conséquence, différents critères peuvent permettre le contrôle de la délivrance de la substance active et de l'ensemencement d'une cellule nuageuse, tels que par exemple la rupture des moyens aérostatiques sous la forme d'un ballon. Tout d'abord, le matériau constituant principalement le ballon possède une limite d'élasticité propre. Aussi, selon le matériau sélectionné, notamment sa composition ou ses dimensions, pour constituer le ballon et plus généralement le dispositif pour l'ensemencement, en fonction de l'application désirée, il est possible de sensiblement contrôler le déclenchement de la délivrance de la substance active en « programmant » sensiblement l'altitude à laquelle le ballon éclatera. En variante ou en complément, en diminuant ou augmentant la quantité de gaz présente au sein de la cellule nuageuse et/ou en changeant la composition du gaz, il est également possible de réguler, c'est-à-dire d'accélérer ou retarder, la rupture du ballon ou plus généralement du dispositif et finalement la diffusion de la substance active.

En outre, un dispositif pour l'ensemencement d'une cellule nuageuse conforme à l'invention peut comporter une substance active AS, ladite substance étant comprise au sein des moyens pour véhiculer ladite substance active. Un tel agencement garantit notamment un dispositif tout-en-un, prêt à l'emploi pour un utilisateur débutant ou averti. Comme précisé précédemment, ladite substance active AS doit avoir préférentiellement une forte affinité avec l'eau. Selon l'application et/ou la structure du dispositif pour l'ensemencement d'une cellule nuageuse, ladite substance active AS peut se présenter sous différentes formes, généralement solides, telles qu'à titre d'exemples non limitatifs, des cristaux de différentes tailles ou des poudres. L'emploi d'une substance active AS sous la forme de poudres se révèle particulièrement intéressant, puisque ses délivrance, dispersion et/ou diffusion sont plus facilement contrôlables et/ou réglables, que la délivrance de la substance active se fasse de manière soudaine ou progressive.

Généralement, ladite substance active AS peut être avantageusement mais non limitativement constituée de noyaux glaçogènes, tels que l'iodure d'argent ou encore l'iodure de cuivre. Préférentiellement, la substance active AS d'un dispositif conforme à l'invention peut être principalement constituée d'iodure d'argent. L'emploi d'iodure d'argent est particulièrement intéressant et par conséquent préféré, puisqu'il s'agit de la particule la plus efficace à -5°C en faibles quantités. Toutefois, l'iodure d'argent se révèle dans de nombreux cas toxique et non écologique. En variante ou en complément, la substance active d'un dispositif conforme à l'invention peut être principalement constituée de sels hygroscopiques. En effet, selon l'application recherchée, du fait de la forte toxicité imposée par l'iodure d'argent, d'autres chercheurs préconisent l'utilisation des sels hygroscopiques, sous la forme par exemple de sels de sodium, calcium ou de magnésium, d'alginates ou encore de matériaux réfrigérants, tels que la neige carbonique, le propane ou l'azote liquide.

Par ailleurs, quelle que soit la configuration du dispositif 10 selon l'invention, en variante ou en complément, la substance active AS d'un dispositif 10 conforme à l'invention peut être associée à des particules marqueurs M de propagation détectables par tout moyen d'analyse adapté. La présence de telles particules marqueurs M est particulièrement astucieuse puisqu'elles permettent à un utilisateur du dispositif, tel qu'un agriculteur, d'observer la propagation de la substance active et ainsi de s'assurer de l'efficacité du dispositif pour l'ensemencement d'une cellule nuageuse. De telles particules M peuvent avantageusement être analysables par tout moyen d'analyse adapté, tel que, à titre d'exemples non limitatifs, un spectrophotomètre ultraviolet ou un spectromètre infrarouge, par absorption ou par fluorescence. En variante, il pourrait éventuellement être envisagé que les particules M puissent être colorées, afin que celles-ci soient détectables et/ou observables dans le domaine du visible à l'œil nu, voire éventuellement à l'aide d'un système optique de vision grossissant.

Selon un exemple d'application particulièrement apprécié, de tels particules marqueurs M peuvent comprendre des particules, paillettes ou filaments d'aluminium, de plastiques ou de micro verres très réfléchissantes par radar, communément employées au sein de systèmes de contre-mesure de type « CHAFF » pour notamment brouiller un radar.

Afin de maîtriser la délivrance d'une substance active AS à une altitude sélectionnée, en fonction notamment de la position de la cellule nuageuse à ensemencer et de l'application, les moyens pour délivrer la substance active d'un dispositif pour l'ensemencement d'une cellule nuageuse conforme à l'invention peuvent coopérer avec des moyens déclencheurs agencés pour provoquer la délivrance de la substance active AS à une position donnée, lesdits moyens déclencheurs étant compris au sein du dispositif 10 selon l'invention. En variante, les moyens pour délivrer la substance active peuvent éventuellement comporter les moyens déclencheurs. De tels moyens déclencheurs permettent à un utilisateur d'un dispositif 10 conforme à l'invention d'actionner en temps voulu et à une position prédéterminée la délivrance de la substance active AS et in fine d'assurer un ensemencement plus efficace, en garantissant un ciblage plus précis, voire optimal, de la cellule nuageuse à ensemencer.

Deux exemples non limitatifs des moyens déclencheurs d'un dispositif 10 conforme à l'invention sont décrits par les troisième et quatrième modes de réalisation en lien respectivement avec les figures 4A et 4B.

Selon un troisième mode de réalisation d'un dispositif conforme à l'invention décrit en lien avec la figure 4A, ledit dispositif 10 pour ensemencer une cellule nuageuse 1 comporte des moyens aérostatiques 11 sous la forme d'un ballon, à l'instar de ceux décrit précédemment en liaison avec les figures 3A, 3B ou 3C. Aussi, les moyens aérostatiques 11 peuvent avantageusement être principalement constitués d'un composé élastique. En outre, selon ce mode de réalisation, les moyens pour délivrer une substance active AS, voire des particules marqueurs M, et les moyens pour délivrer ladite substance active sont avantageusement confondus avec les moyens aérostatiques 11. La substance active AS et éventuellement les particules marqueurs M sont alors enceintes au sein des moyens aérostatiques 11. Par ailleurs, ledit dispositif 10 comprend des moyens déclencheurs 15' agencés pour provoquer la délivrance de la substance active AS à une position donnée, éventuellement définie en trois dimensions selon un référentiel x, y, z. Selon ce mode de réalisation, de tels moyens déclencheurs 15' comportent un ou plusieurs éléments saillants 15's, tels qu'à titre d'exemples non limitatifs, des ergots. Le ou lesdits éléments saillants 15's peuvent avantageusement coopérer de manière solidaire avec une sangle, ladite sangle ceinturant du moins en partie les moyens aérostatiques 11. La partie distale faisant saillie des éléments saillants 15's est avantageusement en contact avec les moyens aérostatiques, en l'espèce le ballon 11. Comme précisé précédemment, lorsque le ballon s'élève dans l'atmosphère et accroît son altitude, la présence de molécules d'air dans l'atmosphère décroit du fait d'une diminution de la pression. Or, le ballon étant scellé, la quantité de molécules de gaz reste invariante au sein du ballon. Les collisions des molécules de gaz au sein du ballon étant plus importante, ce dernier continue de gonfler. Les éléments saillants étant en contact avec les moyens aérostatiques et ces derniers étant soumis éventuellement à un surgonflage, le contact entre les éléments saillants et les moyens aérostatiques provoque finalement la rupture des moyens aérostatiques et entraîne la délivrance de la substance active AS, voire de particules marqueurs M si celles-ci sont présentes, avantageusement au sein de la cellule nuageuse 1.

En variante, selon un quatrième mode de réalisation d'un dispositif conforme à l'invention décrit en lien avec la figure 4B, ledit dispositif 10 pour ensemencer une cellule nuageuse 1 comporte des moyens aérostatiques 11 sous la forme d'un ballon, à l'instar de ceux décrit précédemment. Lesdits moyens aérostatiques peuvent avantageusement être principalement constitués d'un composé élastique. Selon ce mode de réalisation, les moyens pour véhiculer 12 une substance active, voire des particules marqueurs M, et les moyens pour délivrer 13 ladite substance active sont avantageusement confondus avec les moyens aérostatiques 11. La substance active AS, éventuellement les particules marqueurs M lorsque ces dernières sont présentes, sont alors enceintes au sein des moyens aérostatiques 11. Par ailleurs, ledit dispositif 10 comprend des moyens déclencheurs 15" agencés pour provoquer la délivrance de la substance active à une position et/ou une altitude données. Selon ce mode de réalisation, de tels moyens déclencheurs 15" consistent en un objet électronique. Un tel objet électronique comporte une première unité de traitement 21, sous la forme par exemple d'un microcontrôleur ou d'un microprocesseur. En outre, l'objet électronique comporte un ou plusieurs capteurs de mesure 24 coopérant avec ladite première unité de traitement 21 et délivrant à celle-ci une mesure d'une première grandeur physique GP1 représentative de la pression au sein des moyens aérostatiques 11. Un tel capteur 24 peut mesurer ladite pression absolue ou relative au sein des moyens aérostatiques ou un différentiel de pression entre l'environnement extérieur voisin desdits moyens aérostatiques 11 et l'intérieur de ces derniers. A titre d'exemples non limitatifs, un tel capteur 24 peut consister en un ou plusieurs manomètres, piézomètres ou encore baromètres. En variante ou en complément, un tel capteur peut délivrer une mesure d'une première grandeur GP1 relative à la température et/ou au taux d'humidité au sein des moyens aérostatiques et/ou dans un environnement proche desdits moyens aérostatiques. Ladite première unité de traitement 21 est agencée pour comparer la mesure de grandeur physique à un seuil prédéterminé. Pour ce faire, l'objet électronique comporte une mémoire de données 22 coopérant avec ladite première unité de traitement 21 au moyen de bus de communication internes, représentés en figure 4B par des doubles flèches en trait simple. Avant lancement du dispositif conforme à l'invention, ledit seuil prédéterminé peut être éventuellement inscrit au sein de la mémoire de données 22. Lorsque ladite mesure atteint ledit seuil, la première unité de traitement 21 est agencée pour générer une commande d'actionnement à destination des moyens pour délivrer 13 la substance active AS, requérant le déclenchement contrôlé de la délivrance de la substance active AS. Pour ce faire, les moyens pour délivrer 13 sont à commandes électriques et aptes à interpréter une commande d'actionnement générée par les moyens déclencheurs 15".

En outre, pour que l'objet électronique puisse fonctionner en totale autonomie, ce dernier peut comporter avantageusement une source d'énergie électrique 25, sous la forme d'une ou plusieurs batteries par exemple, voire sous la forme de cellules photovoltaïques positionnées sur le dispositif 10, de source d'énergie éolienne ou encore d'un ou plusieurs condensateurs préalablement chargés et aptes à délivrer l'énergie électrique suffisante pour permettre le fonctionnement de l'objet électronique. La capacité à pouvoir fonctionner d'un objet électronique est directement liée à la capacité énergétique restante et disponible dudit objet électronique.

Par ailleurs, en variante ou en complément, pour permettre une meilleure traçabilité de l'ensemencement d'une telle cellule nuageuse, un dispositif 10 pour l'ensemencement d'une telle cellule nuageuse conforme à l'invention peut en outre comporter des moyens de suivi 15'" (non représentés en figures 4B) de trajectoire et/ou de position dudit dispositif, lesdits moyens de suivi coopérant avec les moyens aérostatiques dudit dispositif 10. Pour ce faire, lesdits moyens de suivi, consistant avantageusement en un deuxième objet électronique, comporte :
- une unité de traitement ;
- un capteur pour mesurer et collecter une grandeur physique relative à la trajectoire et/ou la position du dispositif coopérant avec ladite unité de traitement ;
- une mémoire de données coopérant avec ladite unité de traitement dans laquelle ladite unité de traitement inscrit la grandeur mesurée et collectée selon une périodicité donnée.

Un exemple non limitatif de tels moyens de suivi sont décrits en lien avec la figure 4B, représentant le quatrième mode de réalisation. Selon cet exemple, les première et deuxième unités de traitement consistent avantageusement en une seule et même entité physique 21. In fine, lesdits moyens de suivi 15'" et les moyens déclencheurs 15" d'un dispositif 10 conforme à l'invention peuvent ainsi être confondus et consister en un seul système physique unique. Toutefois, lesdites première et deuxième unité de traitement peuvent être éventuellement dissociées. Par ailleurs, à l'instar des première et deuxième unités de traitement, lesdits moyens déclencheurs 15" et lesdits moyens de suivi 15'" peuvent éventuellement être dissociés.

Comme décrit précédemment, de tels moyens de suivi et/ou déclencheurs comportent une unité de traitement 21, sous la forme par exemple d'un microcontrôleur ou microprocesseur. Ledit objet électronique comporte également une mémoire de données 22, éventuellement une mémoire de programmes 26, lesdites mémoires étant éventuellement dissociées. L'unité de traitement 21 coopère avec lesdites mémoires 22 et 26 au moyen de bus de communication internes, représentés en figure 2 par des doubles flèches en trait simple.

L'objet électronique comporte également un ou plusieurs capteurs de mesure 24 coopérant avec ladite unité de traitement 21, le ou lesdits capteurs étant agencé pour mesurer et collecter une deuxième grandeur physique GP2 relative à la trajectoire et/ou la position du dispositif 10 à un instant donné ou selon une périodicité donnée. Un tel capteur 24 peut mesurer et collecter l'accélération, la position ou la vitesse angulaire d'un dispositif 10 conforme à l'invention lors de son déplacement dans l'atmosphère. Pour ce faire, le ou les capteurs 24 peuvent consister en un accéléromètre et/ou un gyroscope, lesdits accéléromètre et/ou gyroscope coopérant avantageusement avec les moyens aérostatiques 11 selon une liaison mécanique adaptée. En variante ou en complément de l'accéléromètre et/ou du gyroscope, le ou les capteurs 24 peuvent comprendre une centrale inertielle, comportant généralement trois gyromètres et trois accéléromètres, ou encore un système de géolocalisation de type GPS (« *Global Positioning System* » selon une terminologie anglo-saxonne), ladite centrale et/ou ledit système coopérant avantageusement avec les moyens aérostatiques.

Quel que soit le type de deuxième grandeur physique GP2 mesurée et collectée, une représentation numérique de celle-ci est in fine inscrite par l'unité de traitement 21 au sein de la mémoire de données 22 selon une périodicité prédéterminée. Une telle périodicité peut être définie préalablement avant le lancement du dispositif 10, automatiquement ou manuellement. A titre d'exemples non limitatifs, une telle périodicité peut être de l'ordre d'une ou plusieurs dizaines de secondes.

Eventuellement, le ou les capteurs 24 des moyens de suivi d'un dispositif 10 conforme à l'invention peuvent également être aptes à détecter des particules marqueurs M de propagation selon un moyen d'analyse adapté. De tels capteurs 24 peuvent éventuellement être, à titre d'exemples non limitatifs, fondés sur des détections par micro-ondes, par sondes de conductivité, par lames vibrantes ou encore sur des détections optiques et chimiques. En outre, comme précisé précédemment, de telles particules marqueurs M peuvent avantageusement être tracées par tout moyen d'analyse adapté, tel que, à titre d'exemples non limitatifs, un spectrophotomètre ultraviolet ou un spectromètre infrarouge, par absorption ou par fluorescence. En variante ou en complément, un dispositif pour l'ensemencement d'une cellule nuageuse conforme à l'invention peut comporter ou coopérer avec un ou plusieurs réflecteurs radars pour suivre la trajectoire dudit dispositif.

En outre, comme précisé précédemment, pour que l'objet électronique puisse fonctionner en totale autonomie, ce dernier comporte avantageusement une source d'énergie électrique 25, sous la forme d'une ou plusieurs batteries par exemple. La capacité à pouvoir fonctionner d'un objet électronique est directement liée à la capacité énergétique restante et disponible dudit objet électronique.

A l'instar de ce qui a été décrit antérieurement, à des fins d'efficacité, le suivi de la position et/ou de la trajectoire d'un dispositif 10 conforme à l'invention peut avantageusement être assuré au moyen d'enregistrements, inscrits par l'unité de traitement 21 au sein de la mémoire de données 22, de représentations numériques de la deuxième grandeur physique GP2, relative à la trajectoire et/ou la position dudit dispositif 10, mesurée et collectée selon une périodicité donnée. Lesdites mesures sont, une fois l'ensemencement terminé, collectées et transférées.

En variante, il peut être prévu que le dispositif 10 puisse communiquer et/ou transférer une représentation de la ou les grandeurs physiques GP1, GP2 mesurées et collectées en temps réel. Pour ce faire, l'objet électronique matérialisant les moyens déclencheurs 15" et/ou les moyens de suivi 15"' peut comporter des moyens de communication 23 coopérant avec l'unité de traitement 21, également au moyen de bus de communication internes. Lesdits moyens de communication 23 peuvent ainsi assurer une communication N, éventuellement filaire ou sans fil, à destination de toute entité électronique distante 30 à portée de communication. De tels moyens de communication 23 peuvent être également de type « longue distance » et permettre à un tel dispositif 10 de pouvoir transmettre à ladite entité distante 30, tout ou partie du contenu de la mémoire de données 22 au travers de messages distribués par un réseau exploitant, par exemple, les technologies GSM, GPRS ou satellite, dans le cas où ladite communication se ferait sans fil.

En complément, pour maîtriser la trajectoire et/ou la position d'un dispositif 10 pour l'ensemencement d'une cellule nuageuse conforme à l'invention, ce dernier peut comporter des moyens correcteurs de trajectoire (non représentés sur les figures) coopérant avec les moyens aérostatiques 11. De tels moyens correcteurs optionnels permettent notamment de corriger, atténuer et/ou compenser les éventuels éléments et/ou conditions extérieures, tels que par exemple, des courants de vents, pouvant éventuellement influencer la trajectoire du dispositif 10 et/ou la propagation de la délivrance de la substance active AS et in fine l'ensemencement de la cellule nuageuse choisie. A titre d'exemples non limitatifs, de tels moyens correcteurs peuvent consister en un ou plusieurs propulseurs à commandes électriques coopérant avec la première unité de traitement 21. Le ou lesdits propulseurs peuvent provoquer un déplacement sensiblement horizontal ou un déplacement sensiblement vertical du dispositif 10, selon les contraintes subies par ledit dispositif 10 ou la cellule nuageuse à ensemencer. De tels propulseurs peuvent ainsi consister en une ou plusieurs hélices ou turbines. Les différents propulseurs coopèrent avec l'unité de traitement 21 qui traduit une ou plusieurs consignes, enregistrées dans la mémoire de données 22 et/ou transmises en commandes de propulsion acheminées par voie filaire, c'est-à-dire par un bus électrique, ou par voie sans fil depuis l'unité de traitement 21 à destination du propulseur concerné. Tout moyen, élément ou dispositif équivalent à un propulseur peut être employé. L'invention ne saurait être limitée aux moyens correcteurs utilisés. Une telle consigne peut éventuellement être élaborée depuis une entité distante 30 coopérant avec le dispositif 10 ou être en variante élaborée par l'unité de traitement 21 en réponse à un écart détectée entre un objectif de trajectoire déterminée, éventuellement au moyens de coordonnées GPS, avant le lancer du dispositif et la trajectoire courante calculée par ladite unité de traitement via les représentations numériques de la grandeur physique GP2 mesurée et collectée par le ou les capteurs 24.

Selon un deuxième objet, l'invention prévoit également un système pour l'ensemencement d'une cellule nuageuse. Un tel système conforme à l'invention comporte avantageusement un dispositif 10 pour l'ensemencement d'une cellule nuageuse conforme au premier objet de l'invention. Afin d'assurer une meilleure efficacité de l'ensemencement au moyen d'une traçabilité optimisé, ledit système conforme à l'invention comprend en outre une entité électronique distante 30 apte à communiquer avec ledit dispositif 10 via les moyens de communication 23 présents au sein du dispositif 10. Une telle entité électronique 30 est avantageusement apte à recevoir et décoder toute mesure relative à la deuxième grandeur physique GP2 transmise par un dispositif 10 pour l'ensemencement d'une cellule nuageuse conforme à l'invention via les moyens de communication dudit dispositif. A titre d'exemples non limitatifs, ladite entité électronique distante 30 peut avantageusement consister en un ordinateur, un téléphone intelligent (« *Smartphone* » selon une terminologie anglo-saxonne), une tablette ou tout autre équipement ou objet électronique agencé pour communiquer avec les moyens déclencheurs 15" et/ou de suivi 15'" d'un dispositif 10 conforme à l'invention.

Par ailleurs, en variante ou en complément, l'entité électronique 30 d'un système pour l'ensemencement d'une cellule nuageuse conforme à l'invention peut être agencée pour lire le contenu de la mémoire de données dudit dispositif 10. Pour ce faire, la mémoire de données 22 d'un dispositif 10 conforme à l'invention peut correspondre physiquement à une ou plusieurs cartes mémoire amovibles, par exemple de type SD (« *Secure Digital* » selon une terminologie anglo-saxonne). Selon cet agencement, l'entité électronique 30 est alors agencée pour lire et accéder au contenu de ladite carte mémoire. Un tel agencement peut résulter du chargement dans une mémoire de programmes de ladite entité électronique 30 d'un produit programme d'ordinateur idoine.

Par ailleurs, l'unité de traitement 21 des moyens déclencheurs 15" et/ou des moyens de suivi 15'" d'un dispositif 10 conforme à l'invention peut être agencée pour produire une ou plusieurs commandes d'actionnement et/ou de propulsion à partir du chargement dans la mémoire de données 22 ou dans une mémoire de programmes 26, éventuellement dissociée de la mémoire de données, d'un produit programme d'ordinateur comportant une ou plusieurs instructions de programme qui, lorsqu'elles sont exécutées ou interprétées par ladite unité de traitement, provoquent la mise en œuvre de procédés idoines.

En complément, le système pour l'ensemencement d'une cellule nuageuse conforme à l'invention peut comprendre une station (non représentée sur les figures) de préparation et/ou de lancement d'un dispositif 10 pour l'ensemencement d'une cellule nuageuse conforme à l'invention, ladite station comportant avantageusement mais non limitativement des équipements ou moyens équivalents pour :
- déterminer et/ou injecter la quantité et/ou la pression de gaz au sein des moyens aérostatiques 11, plus particulièrement au sein de l'enveloppe d'un ballon, afin de remplir les moyens aérostatiques 11 ;
- intégrer et/ou charger une substance active AS et/ou des particules marqueurs M au sein des moyens pour véhiculer 12 ;
- lancer ou lâcher un dispositif 10 pour l'ensemencement d'une cellule nuageuse conforme à l'invention ;
- initialiser et/ou paramétrer la mémoire de données 22 et/ou de programmes 26 des moyens déclencheurs 15", de suivi 15'" et/ou correcteurs de trajectoires d'un dispositif conforme à l'invention.

Une telle initialisation et/ou un tel paramétrage peuvent avantageusement être réalisée par voie filaire ou sans fil, avantageusement par couplage au moyen de protocoles de communication de type RFID (« *Radio-frequency identification* » selon une terminologie anglo-saxonne) ou BT (« *Bluetooth* » selon une terminologie anglo-saxonne).

Par ailleurs, lorsque les moyens aérostatiques comprennent un ballon, selon le matériau employé pour constituer l'enveloppe dudit ballon, la vitesse du remplissage en gaz dudit ballon doit avantageusement être maîtrisée et relativement lente, de l'ordre d'une trentaine de minutes. En effet, les contraintes mécaniques imposées par le ballon, plus particulièrement le matériau le constituant, peuvent entraîner certaines conséquences négatives lors de l'extension dudit matériau, notamment par l'application d'une vitesse d'extension trop rapide. Ainsi, si le gaz est injecté trop rapidement au sein des moyens aérostatiques, en l'espèce un ballon, des fissures, fractures et/ou stries peuvent apparaître sur l'enveloppe dudit ballon, constituant autant de sources d'altération, voire de rupture. En outre, lors de l'injection du gaz, l'emploi d'un détendeur ou régulateur de pression, c'est-à-dire tout équipement agencé pour permettre le passage du gaz depuis un réservoir vers le ballon, induit des températures basses, proches de zéro degré Celsius, et in fine une rigidification de certaines parties du matériau composant le ballon, ladite rigidification pouvant ainsi entraîner une ou plusieurs ruptures de l'enveloppe du ballon, provoquant alors une délivrance éventuelle de la substance active AS à une altitude ou une position non adéquate et/ou non déterminée.

Pour prévenir ces altérations, une station d'un système pour l'ensemencement d'une cellule nuageuse conforme à l'invention peut avantageusement comprendre des moyens pour réguler la pression et/ou la température du gaz lors de son injection au sein des moyens aérostatiques. A titre d'exemples non limitatifs, de tels moyens pour réguler peuvent comporter un détendeur à deux étages, comprenant deux réservoirs à deux pressions différentes, par exemple, respectivement un premier réservoir à cent bars puis un deuxième réservoir à cinq bars. En variante, de tels moyens pour réguler peuvent comprendre ou coopérer avec un détendeur comportant un échangeur thermique. Un tel échangeur peut éventuellement consister en un échangeur de chaleur à serpentin(s) en cuivre, de sorte que la température du gaz lors de son injection dans les moyens aérostatiques n'altère pas ces derniers. Ledit échangeur peut avantageusement être passif ou actif. En variante, lorsque les moyens aérostatiques sous la forme d'un ballon sont à dimensions fixes, c'est-à-dire qu'il comporte une enveloppe avantageusement non élastique, les moyens pour réguler la pression et/ou la température peuvent comporter un injecteur à doubles parois, permettant d'éviter tout contact entre l'enveloppe d'un ballon et l'injecteur.

L'invention a été décrite lors de son utilisation en lien avec des applications d'ensemencement de cellules nuageuses, notamment pour la prévention de la grêle. Elle peut également être mise en œuvre pour agir sur tout type de phénomènes météorologiques, tels que, à titre d'exemples non limitatifs, la suppression des brouillards, l'augmentation des précipitations sous forme de pluie, l'atténuation des cyclones tropicaux, la préservation de la foudre ou encore la lutte contre le gel. En variante, l'invention peut également être employée pour augmenter les précipitations de neiges, par exemple dans les stations de ski ou pour stocker l'eau en hiver sous forme de neige.

Il pourrait également être envisagé que le dispositif conforme à l'invention garantisse d'autres fonctions et/ou applications que celles précédemment décrites et/ou mentionnées, telles qu'à titre d'exemples non limitatif la décontamination ou dépollution de l'eau présente au sein des cellules nuageuses, ou encore la réduction de l'acidité de celle-ci. L'invention ne saurait être limitée à l'application au sein de laquelle le dispositif conforme à l'invention est employé.

Un dispositif conforme à l'invention peut également comporter plusieurs substances actives AS et/ou moyens pour véhiculer et/ou diffuser la ou lesdites substances actives AS, pour agir dans différentes zones de la cellule nuageuse, selon une ou plusieurs températures et/ou altitudes prédéterminées, en employant une ou plusieurs substances actives adaptées. Une telle diffusion, à différentes étapes, permet notamment de limiter le déclenchement de la diffusion d'une ou plusieurs substances actives dans des zones de faible intérêt.

D'autres modifications peuvent être envisagées sans sortir du cadre de la présente invention défini par les revendications ci-annexées.

## Revendications

1. Dispositif (10) pour l'ensemencement d'une cellule nuageuse (1), comportant des moyens pour véhiculer (12) une substance active (AS) et des moyens pour délivrer (13) ladite substance active (AS), ledit dispositif (10) comportant en outre des moyens aérostatiques (11) comprenant un ballon et coopérant avec les moyens pour véhiculer (12) ladite substance active (AS), ledit dispositif (10) étant **caractérisé en ce qu'**il est agencé de sorte que la rupture dudit ballon est provoquée lorsque ledit ballon atteint sensiblement une altitude déterminée.

2. Dispositif (10) selon la revendication précédente, pour lequel les moyens pour véhiculer (12) et les moyens pour délivrer (13) consistent en une seule et même entité physique.

3. Dispositif (10) selon l'une quelconque des revendications précédentes, pour lequel les moyens pour véhiculer (12) et/ou les moyens pour délivrer (13) sont compris au sein des moyens aérostatiques (11) .

4. Dispositif (10) selon l'une quelconque des revendications précédentes, pour lequel les moyens pour délivrer (13) et les moyens aérostatiques (11) consistent en une seule et même entité physique.

5. Dispositif (10) selon l'une quelconque des revendications précédentes, pour lequel les moyens pour véhiculer (12) comporte une substance active (AS) .

6. Dispositif (10) selon la revendication précédente, pour lequel la substance active (AS) est principalement constituée d'iodure d'argent ou de sel hygroscopique.

7. Dispositif (10) selon les revendications 5 ou 6, pour lequel les moyens pour véhiculer (12) comporte également des particules marqueurs (M) de propagation détectables par tout moyen d'analyse adapté.

8. Dispositif (10) selon l'une quelconque des revendications précédentes, pour lequel les moyens pour délivrer (13) comportent ou coopèrent avec des moyens déclencheurs (15',15") agencés pour provoquer la délivrance de la substance active (AS) à une position donnée.

9. Dispositif (10) selon la revendication précédente, pour lequel les moyens déclencheurs (15') comportent un ou plusieurs éléments saillants (15's) dont la partie distale est en contact avec les moyens aérostatiques (11).

10. Dispositif (10) selon la revendication 8, pour lequel les moyens déclencheurs (15") comportent :
- une première unité de traitement (21) ;
- un premier capteur (24) coopérant avec ladite première unité de traitement (21) et délivrant à ladite première unité de traitement (21) une mesure d'une première grandeur physique (GP1) représentative de la pression au sein des moyens aérostatiques (11) ;
- ladite première unité de traitement (21) étant agencée pour comparer la mesure de la première grandeur physique (GP1) à un seuil prédéterminé et, lorsque ladite mesure atteint ledit seuil, pour générer une commande d'actionnement à destination des moyens pour délivrer (13) la substance active (AS) ;
et les moyens pour délivrer (13) sont à commandes électriques et aptes à interpréter les commandes générées par les moyens déclencheurs (15").

11. Dispositif (10) selon l'une quelconque des revendications précédentes, comportant en outre des moyens de suivi (15") de trajectoire et/ou de position dudit dispositif, lesdits moyens de suivi (15") coopérant avec les moyens aérostatiques (11) et comportant :
- une deuxième unité de traitement (21) ;
- un deuxième capteur (24) pour mesurer et collecter une deuxième grandeur physique (GP2) relative à la trajectoire et/ou la position du dispositif (10) coopérant avec ladite deuxième unité de traitement (21) ;
- une mémoire de données (22) coopérant avec ladite deuxième unité de traitement (21) dans laquelle ladite deuxième unité de traitement (21) inscrit la deuxième grandeur mesurée (GP2) et collectée selon une périodicité donnée.

12. Dispositif (10) selon la revendication précédente, pour lequel les première et deuxième unités de traitement consistent en une seule et même entité physique (21).

13. Dispositif selon les revendications 7 et 11, pour lequel le deuxième capteur (24) est apte à détecter les particules marqueurs (M) de propagation selon un moyen d'analyse adapté.

14. Dispositif selon les revendications 11 ou 12, pour lequel le deuxième capteur (24) comporte un accéléromètre et/ou un gyroscope.

15. Dispositif selon l'une quelconque des revendications 11 à 14, pour lequel les moyens de suivi (15") comportent en outre des moyens de communication (23) coopérant avec la deuxième unité de traitement (21), lesdits moyens de communication (23) étant agencés pour transmettre à destination d'une entité électronique distante (30) tout ou partie du contenu de la mémoire de données (22).

16. Dispositif (10) selon l'une quelconque des revendications 11 à 15, comportant des moyens correcteurs de trajectoire coopérant avec les moyens aérostatiques (11).

17. Système pour l'ensemencement d'une cellule nuageuse, comportant un dispositif (10) pour l'ensemencement selon la revendication 15 et une entité électronique distante (30) apte à communiquer avec ledit dispositif (10) via les moyens de communication (23) au travers d'une liaison (N) filaire ou sans fil.

18. Système selon la revendication précédente, pour lequel l'entité électronique (30) est agencée pour lire le contenu de la mémoire (22) des moyens de suivi (15") dudit dispositif (10).

19. Système selon l'une quelconque des revendications 17 et 18, comprenant en outre une station de préparation et/ou de lancement dudit dispositif (10), ladite station comportant :
- des moyens pour réguler la pression et/ou la température du gaz lors de son injection au sein des moyens aérostatiques (11) ;
- de moyens pour charger une substance active AS et/ou des particules marqueurs M au sein des moyens pour véhiculer (12) ;
- des moyens pour lancer ou lâcher dudit dispositif 10.

## Patentansprüche

1. Vorrichtung (10) zum Impfen einer Wolkenzelle (1), umfassend Mittel zum Fördern (12) einer aktiven Substanz (AS) und Mittel zum Abgeben (13) der aktiven Substanz (AS), wobei die Vorrichtung (10) außerdem aerostatische Mittel (11) umfasst, die einen Ballon umfassen und mit den Mitteln zum Fördern (12) der aktiven Substanz (AS) zusammenwirken, wobei die Vorrichtung (10) **dadurch gekennzeichnet ist, dass** sie so angeordnet ist, dass das Zerreißen des Ballons bewirkt wird, wenn der Ballon im Wesentlichen eine bestimmte Höhe erreicht.

2. Vorrichtung (10) nach dem vorhergehenden Anspruch, wobei die Mittel zum Fördern (12) und die Mittel zum Abgeben (13) aus ein und derselben physischen Entität bestehen.

3. Vorrichtung (10) nach einem der vorhergehenden Ansprüche, wobei die Mittel zum Fördern (12) und/oder die Mittel zum Abgeben (13) innerhalb der aerostatischen Mittel (11) enthalten sind.

4. Vorrichtung (10) nach einem der vorhergehenden Ansprüche, wobei die Mittel zum Abgeben (13) und die aerostatische Mittel (11) aus ein und derselben physischen Entität bestehen.

5. Vorrichtung (10) nach einem der vorhergehenden Ansprüche, wobei die Mittel zum Fördern (12) eine aktive Substanz (AS) umfassen.

6. Vorrichtung (10) nach dem vorhergehenden Anspruch, wobei die aktive Substanz (AS) überwiegend aus Silberjodid oder hygroskopischem Salz besteht.

7. Vorrichtung (10) nach Anspruch 5 oder 6, wobei die Mittel zum Fördern (12) auch Ausbreitungsmarkerpartikel (M) umfassen, die durch jedes geeignete Analysemittel nachweisbar sind.

8. Vorrichtung (10) nach einem der vorhergehenden Ansprüche, wobei die Mittel zum Abgeben (13) Auslösemittel (15', 15") umfassen oder mit diesen zusammenwirken, die so angeordnet sind, dass sie die Abgabe der aktiven Substanz (AS) an einer bestimmten Stelle bewirken.

9. Vorrichtung (10) nach dem vorhergehenden Anspruch, wobei die Auslösemittel (15') ein oder mehrere vorstehende Elemente (15's) umfassen, deren distaler Teil mit den aerostatischen Mitteln (11) in Kontakt ist.

10. Vorrichtung (10) nach Anspruch 8, wobei die Auslösemittel (15") umfassen:
- eine erste Verarbeitungseinheit (21);
- einen ersten Sensor (24), der mit der ersten Verarbeitungseinheit (21) zusammenwirkt und an die erste Verarbeitungseinheit (21) eine Messung einer ersten physikalischen Größe (GP1) liefert, die für den Druck innerhalb der aerostatischen Mittel (11) repräsentativ ist;
- wobei die erste Verarbeitungseinheit (21) angeordnet ist, um die Messung der ersten physikalischen Größe (GP1) mit einem vorbestimmten Schwellenwert zu vergleichen und, wenn die Messung den Schwellenwert erreicht, einen Betätigungsbefehl für die Mittel zum Abgeben (13) der aktiven Substanz (AS) zu erzeugen;
und wobei die Mittel zum Abgeben (13) elektrisch gesteuert werden und in der Lage sind, die von den Auslösemitteln (15") erzeugten Befehle zu interpretieren.

11. Vorrichtung (10) nach einem der vorhergehenden Ansprüche, ferner umfassend Mittel zum Verfolgen (15") der Trajektorie und/oder Position der Vorrichtung, wobei die Mittel zum Verfolgen (15") mit den aerostatischen Mitteln (11) zusammenwirken und umfassend:
- eine zweite Verarbeitungseinheit (21);
- einen zweiten Sensor (24) zum Messen und Sammeln einer zweiten physikalischen Größe (GP2), die sich auf die Trajektorie und/oder Position der Vorrichtung (10) bezieht, der mit der zweiten Verarbeitungseinheit (21) zusammenarbeitet;
- einen Datenspeicher (22), der mit der zweiten Verarbeitungseinheit (21) zusammenwirkt, in den die zweite Verarbeitungseinheit (21) die zweite gemessene physikalische Größe (GP2) schreibt und gemäß einer gegebenen Periodizität erfasst.

12. Vorrichtung (10) nach dem vorhergehenden Anspruch, wobei die erste und zweite Verarbeitungseinheit aus ein und derselben physischen Entität (21) bestehen.

13. Vorrichtung nach einem der Ansprüche 7 und 11, wobei der zweite Sensor (24) in der Lage ist, die Ausbreitungsmarkerpartikel (M) gemäß einem geeigneten Analysemittel zu erfassen.

14. Vorrichtung nach Anspruch 11 oder 12, wobei der zweite Sensor (24) einen Beschleunigungsmesser und/oder ein Gyroskop umfasst.

15. Vorrichtung nach einem der Ansprüche 11 bis 14, wobei die Mittel zum Verfolgen (15") ferner Kommunikationsmittel (23) umfassen, die mit der zweiten Verarbeitungseinheit (21) zusammenwirken, wobei die Kommunikationsmittel (23) so angeordnet sind, dass sie den gesamten oder einen Teil des Inhalts des Datenspeichers (22) an eine entfernte elektronische Einheit (30) übertragen.

16. Vorrichtung (10) nach einem der Ansprüche 11 bis 15, umfassend Trajektorienkorrekturmittel, die mit den aerostatischen Mitteln (11) zusammenwirken.

17. System zum Impfen einer Wolkenzelle, umfassend eine Vorrichtung (10) zum Impfen nach Anspruch 15 und eine entfernte elektronische Entität (30), die in der Lage ist, mit der Vorrichtung (10) über Kommunikationsmittel (23) über eine verdrahtete oder drahtlose Verbindung (N) zu kommunizieren.

18. System nach dem vorhergehenden Anspruch, wobei die elektronische Entität (30) so angeordnet ist, dass sie den Inhalt des Speichers (22) der Mittel zum Verfolgen (15") der Vorrichtung (10) liest.

19. System nach einem der Ansprüche 17 und 18, ferner umfassend eine Station zum Vorbereiten und/oder Starten der Vorrichtung (10), wobei die Station umfasst:
- Mittel zum Regulieren des Drucks und/oder der Temperatur des Gases während dessen Injektion in die aerostatischen Mittel (11);
- Mittel zum Laden einer aktiven Substanz (AS) und/oder von Ausbreitungsmarkerpartikeln (M) in die Mittel zum Fördern (12);
- Mittel zum Starten oder Freigeben der Vorrichtung 10.

## Claims

1. Device (10) for seeding a cloud cell (1), comprising means for conveying (12) an active substance (AS) and means for delivering (13) said active substance (AS), said device (10) further comprising aerostatic means (11) that include a balloon and cooperate with the means for conveying (12) said active substance (AS), said device (10) being **characterized in that** it is arranged such that the rupture of said balloon is provoked when said balloon substantially reaches a predetermined altitude.

2. Device (10) according to the preceding claim, wherein the means for conveying (12) and the means for delivering (13) consist of one and the same physical entity.

3. Device (10) according to either of the preceding claims, wherein the means for conveying (12) and the means for delivering (13) are included within the aerostatic means (11).

4. Device (10) according to any of the preceding claims, wherein the means for delivering (13) and the aerostatic means (11) consist of one and the same physical entity.

5. Device (10) according to any of the preceding claims, wherein the means for conveying (12) comprises an active substance (AS).

6. Device (10) according to the preceding claim, wherein the active substance (AS) consists primarily of silver iodide or hygroscopic salt.

7. Device (10) according to either claim 5 or claim 6, wherein the means for conveying (12) also comprises propagation marker particles (M) that can be detected by any suitable analysis means.

8. Device (10) according to any of the preceding claims, wherein the means for delivering (13) comprise or cooperate with triggering means (15', 15") that are arranged to deliver the active substance (AS) at a given position.

9. Device (10) according to the preceding claim, wherein the triggering means (15') comprise one or more projecting elements (15's) of which the distal part is in contact with the aerostatic means (11).

10. Device (10) according to claim 8, wherein the triggering means (15") comprise:
- a first processing unit (21);
- a first sensor (24) that cooperates with said first processing unit (21) and delivers, to said first processing unit (21), a measurement of a first physical quantity (GP1) that is representative of the pressure within the aerostatic means (11);
- said first processing unit (21) being arranged to compare the measurement of the first physical quantity (GP1) with a predetermined threshold and, when said measurement reaches said threshold, to generate an actuation command to the means for delivering (13) the active substance (AS);
and the delivering means (13) are electrically controlled and capable of interpreting the commands generated by the triggering means (15").

11. Device (10) according to any of the preceding claims, further comprising means for tracking (15") the trajectory and/or position of said device, said means for tracking (15") cooperating with the aerostatic means (11) and comprising:
- a second processing unit (21);
- a second sensor (24) for measuring and collecting a second physical quantity (GP2) relating to the trajectory and/or the position of the device (10), and for cooperating with said second processing unit (21); and
- a data memory (22) cooperating with said second processing unit (21), wherein said second processing unit (21) records the second quantity (GP2) that is measured and collected according to a given periodicity.

12. Device (10) according to the preceding claim, wherein the first and second processing units consist of one and the same physical entity (21).

13. Device according to claims 7 and 11, wherein the second sensor (24) is capable of detecting the propagation marker particles (M) according to suitable analysis means.

14. Device according to either claim 11 or claim 12, wherein the second sensor (24) comprises an accelerometer and/or a gyroscope.

15. Device according to any of claims 11 to 14, wherein the tracking means (15") further comprise communication means (23) that cooperate with the second processing unit (21), said communication means (23) being arranged to transmit, to a remote electronic entity (30), all or part of the content of the data memory (22).

16. Device (10) according to any of claims 11 to 15, comprising trajectory correcting means that cooperate with the aerostatic means (11).

17. System for seeding a cloud cell, comprising a seeding device (10) according to claim 15 and a remote electronic entity (30) capable of communicating with said device (10) via the communication means (23) by means a wired or wireless link (N).

18. System according to the preceding claim, wherein the electronic entity (30) is arranged to read the content of the memory (22) of the tracking means (15") of said device (10).

19. System according to either claim 17 or claim 18, further including a station for preparing and/or launching said device (10), said station comprising:
- means for regulating the pressure and/or the temperature of the gas during its injection within the aerostatic means (11);
- means for loading an active substance AS and/or marker particles M within the conveying means (12); and
- means for launching or releasing said device 10.
